# EUROPEAN PATENT SPECIFICATION

(11) **EP 3 232 649 B1**
(45) Date of publication and mention of the grant of the patent: **08.09.2021**
(21) Application number: 16823712.1
(22) Date of filing: 12.05.2016
(51) Int. Cl.: H04M 1/02, G06F 1/16

(54) **FLEXIBLE SCREEN MOBILE TERMINAL CAPABLE OF SLIDING SEPARABLY**
MOBILES ENDGERÄT MIT FLEXIBLEM BILDSCHIRM MIT FÄHIGKEIT FÜR SEPARATES GLEITEN
TERMINAL MOBILE À ÉCRAN SOUPLE POUVANT COULISSER SÉPARÉMENT

(30) Priority: 13.07.2015 CN 201510408563
(43) Date of publication of application: 18.10.2017
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yugui, Dongguan Guangdong 523860 (CN)
(74) Representative: Manitz Finsterwald Patent- und Rechtsanwaltspartnerschaft mbB
(86) International application number: PCT/CN2016/081856
(87) International publication number: WO 2017/008565

(56) References cited:
- EP-A2- 2 315 186
- WO-A1-2014/148698
- CN-A- 103 927 940
- CN-A- 103 941 816
- CN-A- 104 537 955
- CN-A- 104 680 940
- CN-A- 104 980 545
- CN-U- 204 733 213
- US-A1- 2007 129 099
- US-A1- 2014 196 253
- US-A1- 2015 177 789

## Description

### TECHNICAL FIELD

The present invention belongs to a technical field of a bcndablc flexible screen mobile terminal structure, relates to a mobile terminal with a foldable body, and in particular, to a flexible screen mobile terminal capable of sliding separably. The features of the preamble of the independent claim are known from US 2015/177789 A1. Related technologies are known from CN 104 680 940 A, US 2007/129099 A1, EP 2 315 186 A2, and WO 2014/148698 A1.

### BACKGROUND

With continuous innovation in mobile terminal function, a scope of application of a mobile terminal is expanding continuously, and requirement of a user for use of the mobile terminal is also comprehensively improved. As flexible screen technologies are gradually mature, terminal manufacturers are now gradually applying the technologies to their respective products to realize diversification of terminal form, especially to a terminal device that requires a changeable screen size.

The existing mobile terminal adopting a flexible screen, in a folding manner, enables the user to select the terminal to run in different screen sizes according to requirements. Although the flexible screen has a characteristic of being folded and used many times, it usually causes stretch or compression for the flexible screen during folding the flexible screen, and frequent stretch or compression may readily affect reliability of connection between the flexible screen and a terminal body or cause damage for the flexible screen, thus affecting quality of a mobile terminal product.

### DISCLOSURE OF THE INVENTION

### TECHNICAL PROBLEM

An objective of the present invention is to provide a flexible screen mobile terminal capable of sliding separably. By disposing a flexible screen to be moveably connected to a terminal main body or a terminal auxiliary body, it avoids causing stretch for the flexible screen during folding the flexible screen and affecting a service life of the flexible screen.

Another objective of the present invention is to provide a flexible screen mobile terminal capable of sliding separably. By disposing a camera on a terminal auxiliary body, selfie taking and back scene previewing and photographing may be realized in a case of using one camera.

A further objective of the present invention is to provide a flexible screen mobile terminal capable of sliding separably. By disposing a flexible screen support, a flexible screen is fixed and protected, and connection between a terminal main body and a terminal auxiliary body is realized.

### SOLUTIONS

### TECHNICAL SOLUTIONS

The present invention is defined in the independent claim. It is provided a flexible screen mobile terminal capable of sliding separably, wherein the flexible screen mobile terminal capable of sliding separably includes:
a terminal main body, having a first main body surface for mounting a flexible screen;
a terminal auxiliary body, disposed at one end of the terminal main body, and having a first auxiliary body surface for mounting the flexible screen;
the flexible screen, lapped jointly on the first main body surface and the first auxiliary body surface;
a screen support, configured to fix the flexible screen, and enable the flexible screen to be movably connected to the terminal auxiliary body via the screen support;
where the terminal main body and the terminal auxiliary body are detachably connected in a plug-connection mode, and the terminal main body and the terminal auxiliary body in a separation state are capable of rotating relatively around an axis parallel to a plane of the flexible screen; and
the flexible screen mobile terminal is preferably provided a driving device, disposed on the terminal main body or terminal auxiliary body, for driving relative rotation between the terminal main body and the terminal auxiliary body.

In the flexible screen mobile terminal capable of sliding separably described in a preferred embodiment of the present invention, the terminal auxiliary body is provided with a camera component, and a lens of the camera component is located on the first auxiliary body surface.

In the flexible screen mobile terminal capable of sliding separably described in an example, the terminal main body is provided with a sliding groove perpendicular to the axis, enabling the screen support to slide on the sliding groove, and the screen support is slidably connected to the terminal main body via the sliding groove.

In the flexible screen mobile terminal capable of sliding separably described in the example, the screen support is provided with a main body limit block for limiting a relative sliding distance between the screen support and the terminal main body, and the main body limit block is disposed at one end of the screen support near the terminal main body.

In the flexible screen mobile terminal capable of sliding separably described in the present invention, the terminal auxiliary body is provided with a sliding groove perpendicular to the axis, enabling the screen support to slide on the sliding groove, and the screen support is slidably connected to the terminal auxiliary body via the sliding groove.

In the flexible screen mobile terminal capable of sliding separably described in the present invention, the screen support is provided with an auxiliary body limit block for limiting a relative sliding distance between the screen support and the terminal auxiliary body, and the auxiliary body limit block is disposed at one end of the screen support near the terminal auxiliary body.

In the flexible screen mobile terminal capable of sliding separably described in the embodiments of the present invention, connection components are disposed at a position where the terminal main body and the terminal auxiliary body are connected, and the connection components are a buckle and a slot which are matched and can be connected or separated selectively;
where the buckle is disposed on the terminal main body, and the slot is disposed on the terminal auxiliary body;
or, the buckle is disposed on the terminal auxiliary body, and the slot is disposed on the terminal main body.

In the flexible screen mobile terminal capable of sliding separably described in the embodiments of the present invention, both the terminal main body and the terminal auxiliary body have a terminal connection surface, where when the terminal main body and the terminal auxiliary body are connected, terminal connection surfaces of the terminal main body and the terminal auxiliary body are opposite, the buckle is a convex structure disposed protruding from the terminal connection surface, and the buckle is provided with a limit hole penetrating the buckle.

In the flexible screen mobile terminal capable of sliding separably described in the embodiments of the present invention, the slot is a groove structure disposed corresponding to the buckle and pitting in the terminal connection surface, and an elastic limit piece matched with the limit hole is disposed in the slot.

In the flexible screen mobile terminal capable of sliding separably described in the embodiments of the present invention, a limit piece operation component for operating the elastic limit piece is disposed on a side wall of the slot.

A further example provides a flexible screen mobile terminal capable of sliding separably, including:
a terminal main body, having a first main body surface for mounting a flexible screen;
a terminal auxiliary body, disposed at one end of the terminal main body, and having a first auxiliary body surface for mounting the flexible screen;
the flexible screen, lapped jointly on the first main body surface and the first auxiliary body surface;
a screen support, configured to fix the flexible screen, and enable the flexible screen to be movably connected to at least one of the terminal main body and the terminal auxiliary body via the screen support;
where the terminal main body and the terminal auxiliary body are detachably connected in a plug-connection mode, and the terminal main body and the terminal auxiliary body in a separation state are capable of rotating relatively around an axis parallel to a plane of the flexible screen.

In the flexible screen mobile terminal capable of sliding separably described in the example, the terminal auxiliary body is provided with a camera component, and a lens of the camera component is located on the first auxiliary body surface.

In the flexible screen mobile terminal capable of sliding separably described in the example, the terminal main body is provided with a sliding groove perpendicular to the axis, enabling the screen support to slide on the sliding groove, and the screen support is slidably connected to the terminal main body via the sliding groove.

In the flexible screen mobile terminal capable of sliding separably described in the example, the screen support is provided with a main body limit block for limiting a relative sliding distance between the screen support and the terminal main body, and the main body limit block is disposed at one end of the screen support near the terminal main body.

In the flexible screen mobile terminal capable of sliding separably described in the example, the terminal auxiliary body is provided with a sliding groove perpendicular to the axis, enabling the screen support to slide on the sliding groove, and the screen support is slidably connected to the terminal auxiliary body via the sliding groove.

In the flexible screen mobile terminal capable of sliding separably described in the example, the screen support is provided with an auxiliary body limit block for limiting a relative sliding distance between the screen support and the terminal auxiliary body, and the auxiliary body limit block is disposed at one end of the screen support near the terminal auxiliary body.

In the flexible screen mobile terminal capable of sliding separably described in the example, connection components are disposed at a position where the terminal main body and the terminal auxiliary body are connected, and the connection components are a buckle and a slot which are matched and can be connected or separated selectively;
where the buckle is disposed on the terminal main body, and the slot is disposed on the terminal auxiliary body;
or, the buckle is disposed on the terminal auxiliary body, and the slot is disposed on the terminal main body.

In the flexible screen mobile terminal capable of sliding separably described in the example, both the terminal main body and the terminal auxiliary body have a terminal connection surface, where when the terminal main body and the terminal auxiliary body arc conncctcd, terminal connection surfaces of the terminal main body and the terminal auxiliary body are opposite, the buckle is a convex structure disposed protruding from the terminal connection surface, and the buckle is provided with a limit hole penetrating the buckle.

In the flexible screen mobile terminal capable of sliding separably described in the example, the slot is a groove structure disposed corresponding to the buckle and pitting in the terminal connection surface, and an elastic limit piece matched with the limit hole is disposed in the slot.

In the flexible screen mobile terminal capable of sliding separably described in the example, a limit piece operation component for operating the elastic limit piece is disposed on a side wall of the slot.

### BENEFICIAL EFFECTS OF THE INVENTION

### BENEFICIAL EFFECTS

A flexible screen mobile terminal capable of sliding separably provided by the present invention may realize dual requirements for a large-size screen and a small-volume product; a flexible screen may not be stretched or compressed when the terminal is repeatedly bent, and a service life thereof is prolonged; a terminal main body and a terminal auxiliary body are capable of rotating 360° relatively, and it is able to perform previewing in photographing a front or back scene of the terminal so as to improve photography effect; and connection between the terminal main body and the terminal auxiliary body via a screen support can ensure relative movement of the terminal main body and the terminal auxiliary body better.

### BRIEF DESCRIPTION OF DRAWINGS

### DESCRIPTION OF DRAWINGS

FIG. 1 is an isometric, schematic diagram of of a flexible screen mobile terminal capable of sliding separably described in an embodiment of the present invention.
FIG. 2 is an isometric, schematic diagram from another point of view of a flexible screen mobile terminal capable of sliding separably described in an embodiment of the present invention.
FIG. 3 is an isometric, schematic diagram of a terminal main body and a terminal auxiliary body in a separation state in a flexible screen mobile terminal capable of sliding separably described in an embodiment of the present invention.
FIG. 4 is an isometric, schematic diagram from another point of view of a terminal main body and a terminal auxiliary body in a separation state in a flexible screen mobile terminal capable of sliding separably described in an embodiment of the present invention.
FIG. 5 is a magnified diagram of I position in FIG. 4.
FIG. 6 is a schematic diagram of a screen support and a flexible screen in an assembly state described in an embodiment of the present invention.
FIG. 7 is a schematic diagram of a screen support and a flexible screen in an assembly state described in another embodiment of the present invention.
FIG. 8 is a schematic diagram of a terminal main body and a terminal auxiliary body in an exploded state described in an embodiment of the present invention.
FIG. 9 is a side view of a screen support described in an embodiment of the present invention.
FIG. 10 is a schematic diagram of a state that a screen support is located in a sliding groove described in an embodiment of the present invention.
FIG. 11 is a schematic diagram of a second main body surface and a second auxiliary body surface in a mutual bonding state described in an embodiment.
FIG. 12 is a schematic diagram from another point of view of a second main body surface and a second auxiliary body surface in a mutual bonding state described in an embodiment.
FIG. 13 is a side view of a second main body surface and a second auxiliary body surface in a mutual bonding state described in an embodiment.

In these drawings:
100. terminal main body; 101. first main body surface; 102. second main body surface;
200. terminal auxiliary body; 201. first auxiliary body surface; 202. second auxiliary body surface; 203. sliding groove;
300. flexible screen;
400. screen support; 401. first support piece; 402. second support piece; 403. third support piccc; 404. fourth support piccc; 405. auxiliary body limit block;
500. camera component; 600. cable; 700. axis; 800. buckle; 900. slot.

### PREFERRED EMBODIMENTS OF THE INVENTION

### PREFERRED IMPLEMENTATION MANNER OF THE INVENTION

Technical solutions of the present invention are further described as follows with reference to the accompanying drawings in specific implementation manners.

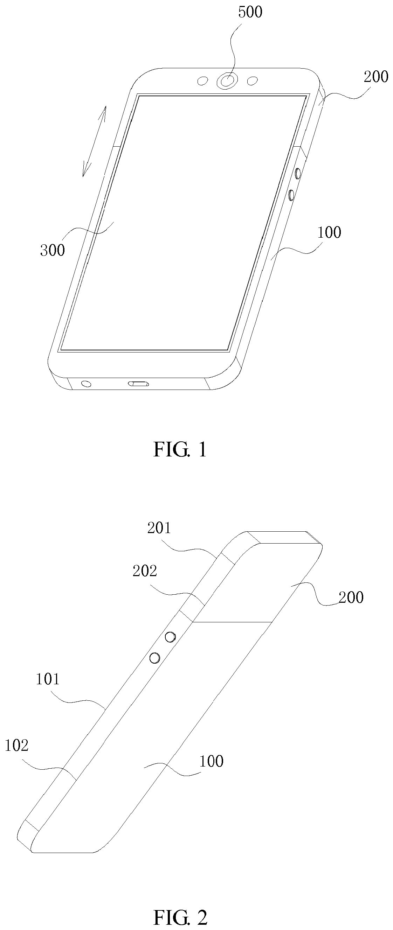

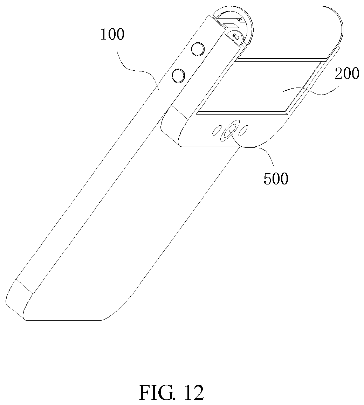

As shown in FIGs. 1 to 13, in an embodiment, a flexible screen mobile terminal capable of sliding separably described in the present invention includes:
a terminal main body, having a first main body surface for mounting a flexible screen;
a terminal auxiliary body, disposed at one end of the terminal main body, and having a first auxiliary body surface for mounting the flexible screen;
the flexible screen, lapped jointly on the first main body surface and the first auxiliary body surface;
a screen support, configured to fix the flexible screen, and enable the flexible screen to be movably connected to at least one of the terminal main body and the terminal auxiliary body via the screen support;
where the terminal main body and the terminal auxiliary body are detachably connected in a plug-connection mode, and the terminal main body and the terminal auxiliary body in a separation state are capable of rotating relatively around an axis parallel to a plane of the flexible screen.

As shown in FIGs. 1 to 4 and 11 to 13, in the present invention, a mobile terminal is divided into a terminal main body 100 and a terminal auxiliary body 200, the terminal main body 100 and the terminal auxiliary body 200 are separable and are capable of rotating or folding relatively, and the terminal main body 100 and the terminal auxiliary body 200 have a common flexible screen 300 to realize a selective operation on a large-size screen and a small-size screen of the terminal, so as to enhance user experience.

Specifically, there may be many types of connection relationships between the flexible screen 300 and the terminal main body 100 or the terminal auxiliary body 200.

For example, in an embodiment of the present invention, the flexible screen 300 is fixedly connected to a first main body surface 101 of the terminal main body 100, and the flexible screen 300 and the terminal auxiliary body 200 are relatively slidably connected at a first auxiliary body surface 201.

Since an axis 700 around which the terminal main body 100 and the terminal auxiliary body 200 rotate relatively may not be completely lapped with a plane of the flexible screen 300, in a process of relative rotation between the terminal main body 100 and the terminal auxiliary body 200, if the flexible screen is fixedly connected on both of them, it is inevitable to produce a force on the flexible screen 300, and the force may cause stretch or compression for the flexible screen 300 to a certain extent. When the flexible screen 300, the terminal main body 100 and the terminal auxiliary body 200 are in a fixed connection state, it may pull or extrude the flexible screen 300 that the force is not released, resulting in stretch deformation or compression deformation of the flexible screen 300, which affects a service life of the flexible screen 300. However, in this embodiment, when the terminal main body 100 and the terminal auxiliary body 200 are relatively rotating, the flexible screen 300 and the terminal auxiliary body 200 arc relatively sliding, thereby avoiding damage caused by the stretch or compression.

In an embodiment of the present invention, a connection relationship between the flexible screen and the terminal may further be: the terminal main body 100 and the flexible screen 300 are relatively slidably connected at a first main body surface 101, and the terminal auxiliary body 200 and the flexible screen 300 are fixedly connected at a first auxiliary body surface 201.

In an embodiment of the present invention, the flexible screen 300 and the terminal main body 100 are relatively slidably connected at a first main body surface 101, and the flexible screen 300 and the terminal auxiliary body 200 arc relatively slidably connected at a first auxiliary body surface 201. This connection structure may enable the flexible screen 300 to slide relative to the terminal main body 100 and the terminal auxiliary body 200 in the process of relative rotation between the terminal main body 100 and the terminal auxiliary body 200, or selectively control a relative position of the fixed terminal main body 100 and the flexible screen 300 or a relative position of the terminal auxiliary body 200 and the flexible screen 300 by disposing a controllable clamping device.

In a specific embodiment of the present invention, a terminal main body 100 and a terminal auxiliary body 200 are slidably connected via a screen support 400.

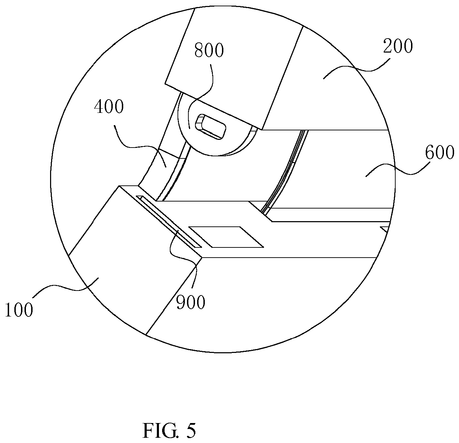

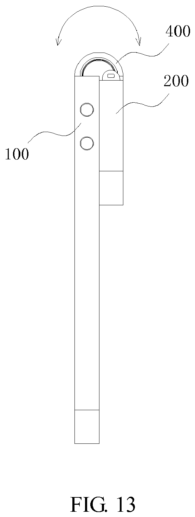

As shown in FIGs. 5 and 13, in an embodiment of the present invention, a screen support 400 is disposed at external of the flexible screen 300 for supporting the flexible screen 300, the flexible screen 300 is disposed on an inside of a frame of the screen support 400, and an outside of the frame of the screen support 400 is connected to the terminal main body 100 and the terminal auxiliary body 200.

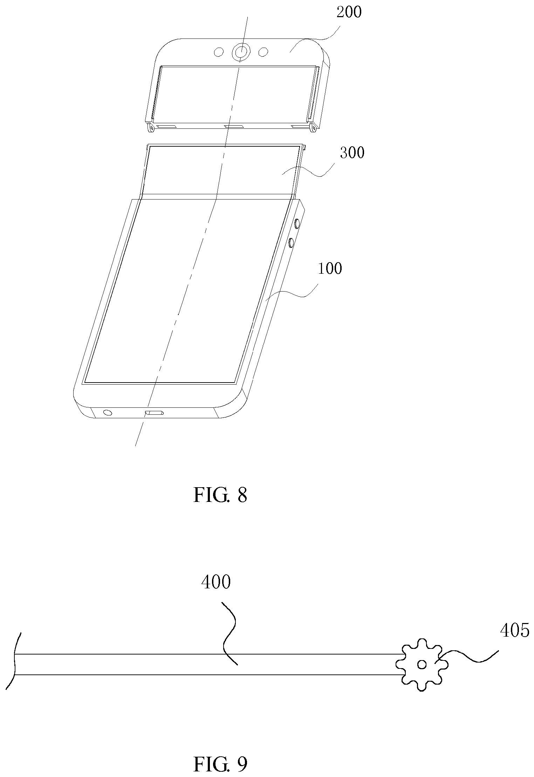

As shown in FIGs. 8, 9 and 10, in an embodiment of the present invention, the terminal auxiliary body 200 is provided with a sliding groove 203 perpendicular to the axis 700, enabling the screen support 400 to slide on the sliding groove 203, and the screen support 400 is slidably connected to the terminal auxiliary body 200 via the sliding groove 203. The screen support 400 is provided with an auxiliary body limit block 405 for limiting a relative sliding distance between the screen support 400 and the terminal auxiliary body 200, and the auxiliary body limit block 405 is disposed at one end of the screen support 400 near the terminal auxiliary body 200.

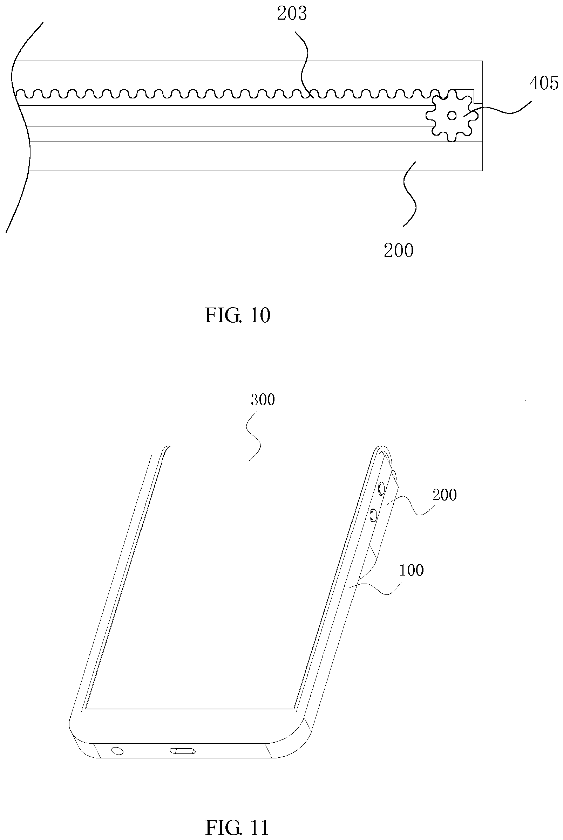

As shown in FIGs. 9 and 10, in the present invention, the auxiliary body limit block 405 is a gear-like structure, and is rotatably mounted to the screen support 400 via a rotation shaft. A rack structure matched with the auxiliary body limit block 405 is provided in the sliding groove 203, and a relative position of the terminal auxiliary body 200 and the screen support 400 is controlled by cooperation of a gear and a rack.

In the present invention, the terminal main body 100 is provided with a sliding groove perpendicular to the axis 700, enabling the screen support 400 to slide on the sliding groove, and the screen support 400 is slidably connected to the terminal main body 100 via the sliding groove. The screen support 400 is provided with a main body limit block for limiting a relative sliding distance between the screen support 400 and the terminal main body 100, and the main body limit block is disposed at one end of the screen support 400 near the terminal main body 100.

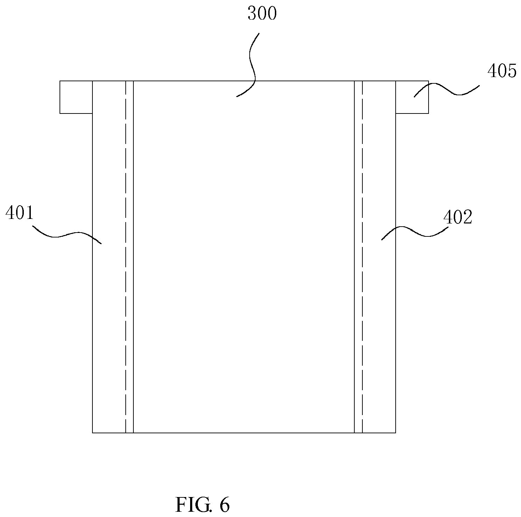

As shown in FIG. 6, the screen support 400 further includes: a first support piece 401 and a second support piece 402 disposed perpendicular to the axis 700 around which the terminal main body 100 and the terminal auxiliary body 200 rotate relatively, where the first support piece 401 and the second support piece 402 are disposed in parallel to each other, respectively located on both sides of the flexible screen 300, and fixedly connected to the flexible screen 300. When the screen support 400 and the terminal auxiliary body 200 are slidably connected, and the terminal main body 100 and the terminal auxiliary body are relatively rotating, the screen support 400 is bended, and the screen support 400 is configured to slidably connect the flexible screen 300 and the terminal auxiliary body 200. When the screen support 400 and the terminal main body 100 are slidably connected, and the terminal main body 100 and the terminal auxiliary body 200 are relatively rotating, the screen support 400 is bended, and the screen support 400 is configured to slidably connect the flexible screen 300 and the terminal main body 100.

In an embodiment of the present invention, the first support piece 401 and the second support piece 402 respectively include an upper support plate and a lower support plate parallel to each other, where the upper support plate and the lower support plate are made from a flexible material capable of being bent repeatedly, are respectively located on two surfaces of the flexible screen 300, and clamp the flexible screen 300 tightly.

In an embodiment of the present invention, the upper support plate and the lower support plate are a unitary structure, and a connection plate is disposed between the upper support plate the lower support plate. The upper support plate, the lower support plate and the connection plate form a groove for mounting the flexible screen 300, and the flexible screen 300 is fixedly mounted in the groove. The upper support plate, the lower support plate and the connection plate are made from a flexible material capable of being bent repeatedly.

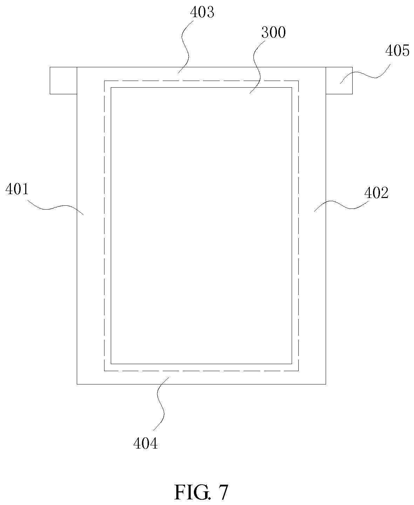

As shown in FIG. 7, in an embodiment of the present invention, a third support piece 403 and a fourth support piece 404 for connecting the first support piece 401 and the second support piece 402 are disposed at two ends of the first support piece 401 and the second support piece 402, respectively. In this embodiment, a structure, material and manufacturing method of the third support piece 403 and the fourth support piece 404 are same as those of the first support piece 401 and the second support piece 402.

In another embodiment, since it is unnecessary to bend the third support piece 403 and the fourth support piece 404 in a length direction thereof, the third support piece 403 and the fourth support piece 404 may be formed using a material with relatively rigidity, and support of the third support piece 403 and the fourth support piece 404 may ensure reliable support of the screen support 400 to the flexible screen 300.

In an embodiment of the present invention, the terminal main body 100 further includes a second main body surface 102 opposite to the first main body surface 101, and a main body mounting space for mounting internal elements of the terminal is formed between the first main body surface 101 and the second main body surface 102; and the terminal auxiliary body 200 further includes a second auxiliary body surface 202 opposite to the first auxiliary body surface 201, and an auxiliary body mounting space for mounting the internal elements of the terminal is formed between the first auxiliary body surface 201 and the second auxiliary body surface 202.

Conventional components in a traditional mobile phone, such as a main circuit board, a battery, a speaker, and an antennas, are disposed in the main body mounting space, and an auxiliary circuit board, a camera component 500, a flash light, and a receiver arc disposed in the auxiliary body mounting space. Signal transmission between the main circuit board and the auxiliary circuit board is performed via a cable 600.

In an embodiment of the present invention, an independent power supply for supplying power to an auxiliary body portion may be disposed in the auxiliary body mounting space. When elements disposed in the auxiliary body mounting space are less, it may take full advantage of an internal space thereof to provide an independent power supply for supplying power to a flash light specially, and all elements disposed in the auxiliary body mounting space may also be supplied with the power via the independent power supply, so as to reduce consumption of battery power in the main body mounting space.

In an embodiment of the present invention, a power supply may be disposed only in the auxiliary body mounting space, and all elements in the main body mounting space and the auxiliary body mounting space are supplied with the power via the power supply disposed in the auxiliary body mounting space.

As shown in FIGs. 1, 3 and 12, in an embodiment of the present invention, a camera component 500 is disposed in the auxiliary body mounting space, and a lens of the camera component 500 is located on the first auxiliary body surface 201. The camera component 500 is disposed on the first auxiliary body surface 201, and the lens of the camera component 500 is located on the same side as a display of the flexible screen 300 when the terminal main body 100 and the terminal auxiliary body 200 arc connected without relative rotation, which is convenient to preview a photographed image when taking a selfie. When the camera is rotated in a direction towards an operator, within a certain range of rotation angle, an image taken by the camera may be previewed in the flexible screen 300. When the camera is rotated in a direction away from the operator, the lens of the camera component 500 is gradually rotated to the back of the terminal, and a photographed image may be previewed in the flexible screen 300 while photographing a scene behind the terminal.

In an embodiment of the present invention, a relative rotation angle between the terminal main body 100 and the terminal auxiliary body 200 is 360 degree, that is, when taking a state that the terminal main body 100 and the terminal auxiliary body 200 are jointed to each other as a reference, the terminal auxiliary body 200 is capable of rotating by 180 degree in a direction towards the first main body surface 101, so that the first main body surface 101 and the first auxiliary body surface 201 are bonded to each other; similarly, as shown in FIG. 13, when taking a state that the terminal main body 100 and the terminal auxiliary body 200 are jointed to each other as a reference, the terminal auxiliary body 200 is capable of rotating by 180 degree in a direction towards the second main body surface 102, so that the second main body surface 102 and the second auxiliary body surface 202 are bonded to each other.

As shown in FIG. 5, in an embodiment of the present invention, connection components are disposed at a position where the terminal main body 100 and the terminal auxiliary body 200 are connected, and the connection components are a buckle 800 and a slot 900 which are matched and can be connected or separated selectively; where the buckle 800 is disposed on the terminal auxiliary body 200, and the slot 900 is disposed on the terminal main body 100.

The terminal main body 100 and the terminal auxiliary body 200 are connected by the buckle 800 and the slot 900; when it is unnecessary to rotate the terminal main body 100 and the terminal auxiliary body 200 relatively, both of them are fixedly connected via the buckle 800 and the slot 900, so that the terminal main body 100 and the terminal auxiliary body 200 are connected tightly to form a structure similar to a conventional integration terminal.

When it is necessary to rotate the terminal main body 100 and the auxiliary body 200 relatively, the buckle 800 is separated from the slot 900, constraint on the terminal main body 100 and the terminal auxiliary body 200 from the buckle 800 and the slot 900 is released, and relative rotation between the terminal main body 100 and the terminal auxiliary body 200 may be performed.

Specifically, both the terminal main body 100 and the terminal auxiliary body 200 have a terminal connection surface, where when the terminal main body 100 and the terminal auxiliary body 200 are connected, terminal connection surfaces of the terminal main body 100 and the terminal auxiliary body 200 arc opposite, the buckle 800 is a convex structure disposed protruding from the terminal connection surface, and and the buckle 800 is provided with a limit hole penetrating the buckle 800; the slot 900 is a groove structure disposed corresponding to the buckle 800 and pitting in the terminal connection surface, and an elastic limit piece matched with the limit hole is disposed in the slot; a limit piece operation component for operating the elastic limit piece is disposed on a side wall of the slot 900; and the limit piece operation component controls the elastic limit piece to insert into or separate from the limit hole selectively, so as to realize clamping connection or separation.

It should be pointed out that arrangement forms of the buckle 800 and the slot 900 are not limited to the foregoing manner, and the buckle 800 may also be disposed on the terminal main body 100, and the slot 900 is disposed on the terminal auxiliary body 200 in another embodiment.

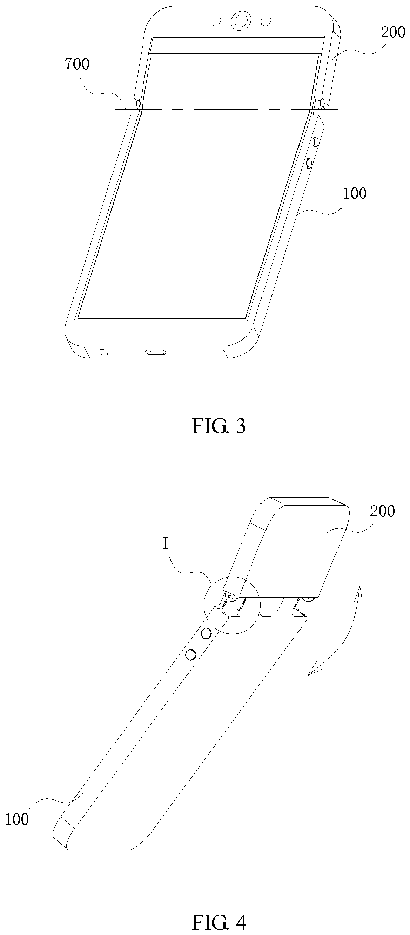

As shown in FIGs. 3 to 5, and FIGs. 11 to 13, in an embodiment of the present invention, the terminal main body 100 and the terminal auxiliary body 200 are connected in a plug-connection mode, the terminal main body 100 and the terminal auxiliary body 200 may relatively move in a direction perpendicular to a connection surface to be separated; when the two are separated, the terminal main body 100 and the terminal auxiliary body 200 are connected via a deformable screen support 400, and thus a relative angle between the two may be changeable to realize relative rotation.

In an embodiment of the present invention, a driving device is disposed on the terminal main body 100, and the driving device enables the terminal main body 100 and the terminal auxiliary body to rotate relatively. Rotation of the terminal auxiliary body 200 relative to the terminal main body 100 is driven by the driving device, so as to automate the operation, and an angle of movement of the terminal auxiliary body 200 relative to the terminal main body 100 is controllable, which acts as definition to a relative position between the terminal main body 100 and the terminal auxiliary body 200, so that the terminal main body 100 and the terminal auxiliary body 200 are relatively fixed at a position with any angle within a range of angle in which the two arc capable of relatively rotating, and the angle may not change by itself to affect photographing effect in photographing with a camera.

In another embodiment of the present invention, the driving device for driving the rotation of the terminal auxiliary body 200 relative to the terminal main body 100 may also be disposed on the terminal auxiliary body 200.

In an embodiment of the present invention, the mobile terminal is a mobile phone.

In another embodiment of the present invention, the mobile terminal may also be other types of mobile terminal devices.

In the description herein, terms "first", "second", "third" and "fourth" are merely for distinguishing objects in description, without representing any special meaning.

It should be stated that the foregoing specific implementation manners are only optimal embodiments and applied technical principles of the present invention.

## Claims

1. A flexible screen mobile terminal, comprising:
a terminal main body (100), having a first main body surface (101) for mounting a flexible screen (300);
a terminal auxiliary body (200), disposed at one end of the terminal main body (100), and having a first auxiliary body surface (201) for mounting the flexible screen (300);
the flexible screen (300), lapped jointly on the first main body surface (101) and the first auxiliary body surface (201); and
a screen support (400), configured to fix the flexible screen (300), and enable the flexible screen (300) to be movably connected to the terminal auxiliary body (200) via the screen support (400),
the terminal main body (100) and the terminal auxiliary body (200) being detachably connected in a plug-connection mode,
the terminal main body (100) and the terminal auxiliary body (200) in a separation state being capable of rotating relatively around an axis (700) parallel to a plane of the flexible screen (300),
the terminal auxiliary body (200) being provided with a sliding groove (203) perpendicular to the axis (700), enabling the screen support (400) to slide on the sliding groove (203), and the screen support (400) being slidably connected to the terminal auxiliary body (200) via the sliding groove (203),
**characterized in that**
the screen support (400) is provided with an auxiliary body limit block (405) for limiting a relative sliding distance between the screen support (400) and the terminal auxiliary body (200), and the auxiliary body limit block (405) is disposed at one end of the screen support (400) near the terminal auxiliary body (200),
the auxiliary body limit block (405) is a gear-like structure, and is rotatably mounted to the screen support (400) via a rotation shaft, a rack structure matched with the auxiliary body limit block (405) is provided in the sliding groove (203), and a relative position of the terminal auxiliary body (200) and the screen support (400) is controlled by cooperation of the gear-like structure and the rack structure.

2. The flexible screen mobile terminal of claim 1, further comprising:
a driving device, disposed on the terminal main body (100) or terminal auxiliary body (200), for driving relative rotation between the terminal main body (100) and the terminal auxiliary body (200).

3. The flexible screen mobile terminal of any one of claims 1-2, wherein the terminal auxiliary body (200) is provided with a camera component (500), and a lens of the camera component (500) is located on the first auxiliary body surface (201).

4. The flexible screen mobile terminal of any one of claims 1-3, wherein connection components are disposed at a position where the terminal main body (100) and the terminal auxiliary body (200) are connected.

5. The flexible screen mobile terminal of claim 4, wherein the connection components are a buckle (800) and a slot (900) which are matched and can be connected or separated selectively.

6. The flexible screen mobile terminal of claim 5, wherein the buckle (800) is disposed on the terminal main body (100), and the slot (900) is disposed on the terminal auxiliary body (200);
or, the buckle (800) is disposed on the terminal auxiliary body (200), and the slot (900) is disposed on the terminal main body (100).

7. The flexible screen mobile terminal of claim 5 or 6, wherein both the terminal main body (100) and the terminal auxiliary body (200) have a terminal connection surface, wherein when the terminal main body (100) and the terminal auxiliary body (200) are connected, terminal connection surfaces of the terminal main body (100) and the terminal auxiliary body (200) are opposite, the buckle (800) is a convex structure disposed protruding from one terminal connection surface, and the buckle (800) is provided with a limit hole penetrating the buckle (800).

8. The flexible screen mobile terminal of claim 7, wherein the slot (900) is a groove structure disposed corresponding to the buckle (800) and pitting in another terminal connection surface, and an elastic limit piece matched with the limit hole is disposed in the slot (900).

9. The flexible screen mobile terminal of claim 8, wherein a limit piece operation component for operating the elastic limit piece is disposed on a side wall of the slot (900).

## Patentansprüche

1. Mobiles Endgerät mit flexiblem Bildschirm, das Folgendes aufweist:
einen Endgerät-Hauptkörper (100), der eine erste Hauptkörperoberfläche (101) zum Anbringen eines flexiblen Bildschirms (300) aufweist;
einen Endgerät-Hilfskörper (200), der an einem Ende des Endgerät-Hauptkörpers (100) angeordnet ist und eine erste Hilfskörperoberfläche (201) zum Anbringen des flexiblen Bildschirms (300) aufweist;
den flexiblen Bildschirm (300), der gemeinsam die erste Hauptkörperoberfläche (101) und die erste Hilfskörperoberfläche (201) überdeckt; und
einen Bildschirmträger (400), konfiguriert zum Fixieren des flexiblen Bildschirms (300) und zum Ermöglichen, dass der flexible Bildschirm (300) über den Bildschirmträger (400) beweglich mit dem Endgerät-Hilfskörper (200) verbunden ist,
wobei der Endgerät-Hauptkörper (100) und der Endgerät-Hilfskörper (200) lösbar in einem Steckverbindungsmodus miteinander verbunden sind,
wobei der Endgerät-Hauptkörper (100) und der Endgerät-Hilfskörper (200) in einem getrennten Zustand in der Lage sind, sich relativ um eine Achse (700) parallel zu einer Ebene des flexiblen Bildschirms (300) zu drehen,
wobei der Endgerät-Hilfskörper (200) mit einer Gleitkehle (203) senkrecht zur Achse (700) ausgestattet ist, die dem Bildschirmträger (400) das Gleiten in der Gleitkehle (203) ermöglicht, und dass der Bildschirmträger (400) über die Gleitkehle (203) verschiebbar mit dem Endgerät-Hilfskörper (200) verbunden ist,
**dadurch gekennzeichnet, dass** der Bildschirmträger (400) mit einem Hilfskörper-Begrenzungsblock (405) zur Begrenzung der relativen Gleitstrecke zwischen dem Bildschirmträger (400) und dem Endgerät-Hilfskörper (200) ausgestattet ist, und dass der Hilfskörper-Begrenzungsblock (405) an einem Ende des Bildschirmträgers (400) in der Nähe des Endgerät-Hilfskörpers (200) angeordnet ist,
der Hilfskörper-Begrenzungsblock (405) eine zahnradähnliche Struktur hat und drehbar über eine Drehachse an dem Bildschirmträger (400) angebracht ist,
eine auf den Hilfskörper-Begrenzungsblock (405) abgestimmte Zahnstangenstruktur in der Gleitkehle (203) vorgesehen ist, und eine relative Position des Endgerät-Hilfskörpers (200) und des Bildschirmträgers (400) durch Zusammenspiel der zahnradähnlichen Struktur und der Zahnstangenstruktur gesteuert wird.

2. Mobiles Endgerät mit flexiblem Bildschirm nach Anspruch 1, das darüber hinaus Folgendes aufweist:
eine Antriebsvorrichtung, die an dem Endgerät-Hauptkörper (100) oder dem Endgerät-Hilfskörper (200) angeordnet ist, um eine relative Drehung zwischen dem Endgerät-Hauptkörper (100) und dem Endgerät-Hilfskörper (200) anzutreiben.

3. Mobiles Endgerät mit flexiblem Bildschirm nach einem der Ansprüche 1-2, wobei der Endgerät-Hilfskörper (200) mit einer Kamerakomponente (500) ausgestattet ist und eine Linse der Kamerakomponente (500) sich auf der ersten Hilfskörperoberfläche (201) befindet.

4. Mobiles Endgerät mit flexiblem Bildschirm nach einem der Ansprüche 1-3, wobei Verbindungskomponenten so in einer Position angeordnet sind, dass der Endgerät-Hauptkörper (100) und der Endgerät-Hilfskörper (200) verbunden sind.

5. Mobiles Endgerät mit flexiblem Bildschirm nach Anspruch 4, wobei die Verbindungskomponenten eine Schließe (800) und ein Schlitz (900) sind, die aufeinander abgestimmt sind und wahlweise verbunden oder getrennt werden können.

6. Mobiles Endgerät mit flexiblem Bildschirm nach Anspruch 5, wobei die Schließe (800) am Endgerät-Hauptkörper (100) angeordnet ist und der Schlitz (900) am Endgerät-Hilfskörper (200) angeordnet ist;
oder wobei die Schließe (800) am Endgerät-Hilfskörper (200) angeordnet ist und der Schlitz (900) am Endgerät-Hauptkörper (100) angeordnet ist.

7. Mobiles Endgerät mit flexiblem Bildschirm nach Anspruch 5 oder 6, wobei sowohl der Endgerät-Hauptkörper (100) als auch der Endgerät-Hilfskörper (200) eine Endgerät-Verbindungsoberfläche haben, wobei wenn der Endgerät-Hauptkörper (100) und der Endgerät-Hilfskörper (200) verbunden sind, die Endgerät-Verbindungsoberflächen des Endgerät-Hauptkörpers (100) und des Endgerät-Hilfskörpers (200) gegenüber liegen, die Schließe (800) eine konvexe Struktur ist, die so angeordnet ist, dass sie aus der Endgerät-Verbindungsoberfläche hervorsteht, und die Schließe (800) mit einer Begrenzungsbohrung versehen ist, die die Schließe durchdringt (800).

8. Mobiles Endgerät mit flexiblem Bildschirm nach Anspruch 7, wobei der Schlitz (900) eine Kehlenstruktur ist, die entsprechend der Schließe (800) angeordnet ist und in eine andere Endgerät-Verbindungsoberfläche hineinragt, und in dem Schlitz (900) ein elastisches Begrenzungsstück angeordnet ist, das auf die Begrenzungsbohrung abgestimmt ist.

9. Mobiles Endgerät mit flexiblem Bildschirm nach Anspruch 8, wobei eine Begrenzungsstück-Betätigungskomponente zum Betätigen des elastischen Begrenzungsstücks an einer Seitenwand des Schlitzes (900) angeordnet ist.

## Revendications

1. Terminal mobile à écran souple, comprenant :
un corps principal de terminal (100), ayant une première surface de corps principal (101) destinée à monter un écran souple (300) ;
un corps auxiliaire de terminal (200), disposé à une extrémité du corps principal de terminal (100), et ayant une première surface de corps auxiliaire (201) destinée à monter l'écran souple (300) ;
l'écran souple (300), chevauchant conjointement la première surface de corps principal (101) et la première surface de corps auxiliaire (201) ; et
un support d'écran (400), configuré pour fixer l'écran souple (300) et permettre à l'écran souple (300) de se relier de façon amovible au corps auxiliaire de terminal (200) par le biais de l'écran de support (400),
le corps principal de terminal (100) et le corps auxiliaire de terminal (200) étant reliés de façon détachable en mode de connexion par fiche,
le corps principal de terminal (100) et le corps auxiliaire de terminal (200) pouvant, dans un état de séparation, tourner de façon relative autour d'un axe (700) parallèle à un plan de l'écran souple (300),
le corps auxiliaire de terminal (200) étant doté d'une rainure coulissante (203) perpendiculaire à l'axe (700), permettant au support d'écran (400) de coulisser sur la rainure coulissante (203), et l'écran de support (400) étant relié coulissant au corps auxiliaire de terminal (200) par le biais de la rainure coulissante (203) ,
**caractérisé en ce que**
l'écran de support (400) est doté d'un bloc de limite de corps auxiliaire (405) pour limiter une distance de coulissement relative entre l'écran de support (400) et le corps auxiliaire de terminal (200), et le bloc de limite de corps auxiliaire (405) est disposé à une extrémité du support d'écran (400) proche du corps auxiliaire de terminal (200),
le bloc de limite de corps auxiliaire (405) est une structure de type engrenage, et est monté en rotation sur le support d'écran (400) par le biais d'un axe de rotation, une structure à crémaillère correspondant au bloc de limite de corps auxiliaire (405) est placée dans la rainure coulissante (203), et une position relative du corps auxiliaire de terminal (200) et du support d'écran (400) est commandée par la coopération de la structure de type engrenage et de la structure à crémaillère.

2. Terminal mobile à écran souple selon la revendication 1, comprenant en outre :
un dispositif d'entraînement, disposé sur le corps principal de terminal (100) ou le corps auxiliaire de terminal (200), pour entraîner la rotation relative entre le corps principal de terminal (100) et le corps auxiliaire de terminal (200).

3. Terminal mobile à écran souple selon l'une quelconque des revendications 1 et 2, dans lequel le corps auxiliaire de terminal (200) est doté d'un composant de caméra (500), et une lentille du composant de caméra (500) est située sur la première surface de corps auxiliaire (201).

4. Terminal mobile à écran souple selon l'une quelconque des revendications 1 à 3, dans lequel des composants de liaison sont disposés à une position dans laquelle le corps principal de terminal (100) et le corps auxiliaire de terminal (200) sont reliés.

5. Terminal mobile à écran souple selon la revendication 4, dans lequel les composants de liaison sont constitués d'une boucle (800) et d'une fente (900) qui correspondent et qui peuvent être reliées ou séparées de façon sélective.

6. Terminal mobile à écran souple selon la revendication 5, dans lequel la boucle (800) est disposée sur le corps principal de terminal (100) et la fente (900) est disposée sur le corps auxiliaire de terminal (200) ;
ou la boucle (800) est disposée sur le corps auxiliaire de terminal (200) et la fente (900) est disposée sur le corps principal de terminal (100).

7. Terminal mobile à écran souple selon la revendication 5 ou 6, dans lequel le corps principal de terminal (100) et le corps auxiliaire de terminal (200) ont tous deux une surface de liaison de terminal, dans lequel le corps principal de terminal (100) et le corps auxiliaire de terminal (200) sont reliés, les surfaces de liaison de terminal du corps principal de terminal (100) et du corps auxiliaire de terminal (200) sont opposées, la boucle (800) est une structure convexe disposée en saillie depuis une surface de liaison de terminal, et la boucle (800) est dotée d'un trou de limitation pénétrant dans la boucle (800).

8. Terminal mobile à écran souple selon la revendication 7, dans lequel la fente (900) est une structure à rainure disposée de façon à correspondre à la boucle (800) et piquée dans une autre surface de liaison de terminal, et une pièce de limite élastique correspondant au trou de limite est disposée dans la fente (900).

9. Terminal mobile à écran souple selon la revendication 8 dans lequel un composant de fonctionnement de pièce de limite pour actionner la pièce de limite élastique est disposé sur une paroi latérale de la fente (900).
